# EUROPÄISCHE PATENTSCHRIFT

(11) **EP 2 616 341 B1**
(45) Veröffentlichungstag und Bekanntmachung des Hinweises auf die Patenterteilung: **18.11.2015**
(21) Anmeldenummer: 11758221.3
(22) Anmeldetag: 21.09.2011
(51) Int. Cl.: B65B 5/06, B65B 23/14, B65B 23/16, B65B 35/44, B65G 47/71

(54) **VERFAHREN UND VORRICHTUNG ZUM BEFÜLLEN EINER MEHRREIHIGEN VERPACKUNGSSCHALE MIT STÜCKIGEN PRODUKTEN**
METHOD AND DEVICE FOR FILLING A MULTI-ROW PACKAGING TRAY WITH FRAGMENTED PRODUCTS
PROCÉDÉ ET DISPOSITIF POUR REMPLIR DE PRODUITS INDIVIDUELS UNE BARQUETTE D'EMBALLAGE À PLUSIEURS RANGÉES

(30) Priorität: 24.09.2010 DE 102010041346
(43) Veröffentlichungstag der Anmeldung: 24.07.2013
(73) Patentinhaber: Loesch Verpackungstechnik GmbH, 96146 Altendorf (DE)
(72) Erfinder: HAMMACHER, Heinz-Peter, 96049 Bamberg (DE)
(74) Vertreter: Prüfer & Partner GbR European Patent Attorneys
(86) Internationale Anmeldenummer: PCT/EP2011/066447
(87) Internationale Veröffentlichungsnummer: WO 2012/038475

(56) Entgegenhaltungen:
- EP-A1- 0 644 119
- US-A- 5 303 811
- US-A- 5 761 883

## Beschreibung

Die Erfindung betrifft ein Verfahren und eine Vorrichtung zum Befüllen einer mehrreihigen Verpackungsschale mit stückigen Produkten.

Die Erfindung betrifft insbesondere eine Verpackungsmaschine zum Befüllen mehrreihiger Verpackungsschalen (sogenannter "Trays") mit stückigen Produkten, wie beispielsweise empfindlichen Produkten der Süß- und Dauerbackwarenindustrie, wie beispielsweise ein- oder mehrschichtigen Keksen (Cookies), Biskuits, Schokoladenprodukten, und dergleichen, wie aus der US 5 761 883 bekannt. Derartige Produkte werden dabei in beliebiger Anordnung, beispielsweise hochkant, flach oder geschuppt, in ein- oder mehrreihigen Verpackungsschalen angeordnet. Die Erfindung betrifft insbesondere eine Anordnung derartiger Produkte in mehrreihigen Verpackungsschalen. Die Erfindung betrifft somit eine in der Fachsprache sogenannte Trayloading-Verpackungsmaschine.

Derartige Maschinen sind neben den oben genannten Produkten der Lebensmittelindustrie auch zum Verpacken anderer stückiger Produkte geeignet, wie beispielsweise technischen Produkten, wie elektronischen oder elektrotechnischen Komponenten, Maschinenelementen, pharmazeutischen oder medizinischen Produkten, und dergleichen, die in der Regel in großen Stückzahlen hergestellt und vertrieben werden. Vorliegend wird die erfindungsgemäße Maschine beispielhaft anhand der Verpackung von Keksprodukten (Cookies) beschrieben.

Stückige Produkte, wie beispielsweise Kekse, werden von einer vorgeschalteten Produktionsanlage in der Regel über mehrere parallele Bahnen direkt, kontinuierlich oder intermittierend an die Verpackungsmaschine übergeben, von der sie in Verpackungsschalen (Trays) gefüllt werden. Diese Trays sind typischerweise aus einem farbigen oder durchsichtigen, leichten Kunststoffmaterial gebildet, und sie nehmen die Kekse beispielsweise in einer Hochkant stehenden, gestapelten Art und Weise auf, wodurch die Kekse beim Transport gegen ein Zerbrechen geschützt sind. Die Trays weisen eine Reihe oder mehrere parallel zueinander angeordnete Reihen (Kavitäten) zur Aufnahme der Produkte auf. Die Trays werden nach dem Befüllen mit den Keksen typischerweise noch von einer Verpackungsfolie und/oder einer Kartonage umgeben und verschlossen.

Bei Trayloading-Verpackungsmaschinen aus dem Stand der Technik werden die einzelnen, parallel zueinander angeordneten Reihen mehrreihiger Verpackungsschalen in der Regel nacheinander, d.h. Reihe für Reihe, mit den Keksen befüllt. Dieses bedingt es, dass die Zuführeinrichtungen zur Übergabe der Kekse an die Verpackungsschale und/oder die Verpackungsschale selbst mehrfach relativ zueinander hin und her bewegt werden müssen. Dieses Verfahren bedingt eine relativ langsame Geschwindigkeit des Befüllens der Trays mit Keksen, d.h. eine relativ geringe Leistung der Verpackungsmaschine. Bei derartigen, bekannten Maschinen können die Produkte typischerweise mit einer Leistung von 800 bis 1.000 Produkten pro Minute verpackt werden.

Diese Leistungen werden heute jedoch nicht mehr als ausreichend angesehen, und es ist daher erwünscht, Maschinen zum Befüllen mehrreihiger Verpackungsschalen mit höherer Verpackungsgeschwindigkeit, d.h. höherer Leistung, einzusetzen. Es ist somit Aufgabe der vorliegenden Erfindung, eine Verpackungsmaschine zum Befüllen mehrreihiger Verpackungsschalen mit stückigen Produkten zu schaffen, die eine höhere Leistung als die im Stand der Technik bekannten Maschinen aufweist.

Diese Aufgabe wird durch ein Verfahren zum Befüllen einer mehrreihigen Verpackungsschale mit stückigen Produkten gemäß Patentanspruch 1 sowie durch eine entsprechende Vorrichtung gemäß Patentanspruch 10 gelöst. Erfindungsgemäß erfolgt demnach das Befüllen einer mehrreihigen Verpackungsschale mit stückigen Produkten nicht mehr Reihe für Reihe, d.h. jede Reihe der Verpackungsschale einzeln nacheinander, sondern die nebeneinander angeordneten Reihen der Verpackungsschale werden im wesentlichen gleichzeitig, parallel oder synchron zueinander mit den Produkten befüllt.

Erfindungsgemäß wird die genannte Aufgabe somit durch ein Verfahren und eine Vorrichtung zum Befüllen einer mehrreihigen Verpackungsschale mit stückigen Produkten gelöst, wobei folgende Schritte ausgeführt werden: Aufteilen eines einreihigen Stroms stückiger Produkte auf mehrere im wesentlichen parallel zueinander angeordnete Bahnen zum Weiterfördern der Produkte; Synchronisieren der einzelnen Ströme der Produkte auf den mehreren Bahnen miteinander so, dass jeweils ein Produkt von einer Bahn im wesentlichen gleichzeitig mit jeweils einem Produkt von den anderen Bahnen an die Verpackungsschale übergeben werden kann; und Übergeben der Produkte an die Verpackungsschale, wobei jeweils ein Produkt von einer Bahn an eine Reihe der Verpackungsschale übergeben wird.

Erfindungsgemäß wird somit jede Reihe einer mehrreihigen Verpackungsschale im wesentlichen gleichzeitig, parallel oder synchron zueinander mit jeweils einem Produkt befüllt. Dieser Befüllvorgang wiederholt sich kontinuierlich so oft, bis die Verpackungsschale vollständig mit Produkten gefüllt ist. Dazu wird die Verpackungsschale nach der Befüllung mit jeweils einer Lage bzw. Gruppe von Produkten (d.h. jeweils einem Produkt pro Reihe) um eine Position weiterbewegt, so dass die nächste Lage bzw. Gruppe der Produkte in die Schale gefüllt werden kann, d.h. wiederum jeweils ein Produkt pro Reihe.

Die Anzahl der nebeneinander bzw. parallel zueinander angeordneten Bahnen, auf denen die stückigen Produkte in der Verpackungsmaschine gefördert und vor dem Befüllen der Verpackungsschale in ihrer Förderbewegung und Lage miteinander synchronisiert und zueinander ausgerichtet werden, entspricht der Anzahl der zu befüllenden Reihen der Verpackungsschale. Jede Förderbahn ist dabei jeweils einer Reihe der Verpackungsschale zugeordnet. Die Verpackungsschale wird in der Übergabestation im wesentlichen in einer Richtung senkrecht oder unter einem einstellbaren Winkel zu der Richtung der Produktförderbahnen vorgeschoben, damit aufeinander folgende Gruppen der Produkte von den parallel zueinander angeordneten Förderbahnen jeweils in die nebeneinander angeordneten Reihen der Verpackungsschale übergeben werden können. In bestimmten Ausführungsformen kann der Winkel zwischen der Bewegungsrichtung der Verpackungsschale und der Richtung der Produktförderbahnen mehr oder weniger flach eingestellt werden, so dass die Verpackungsschale nicht im wesentlichen senkrecht sondern mehr oder weniger waagerecht, flach vorgeschoben wird und die stückigen Produkte somit mehr oder weniger flach in die Verpackungsschale eingeführt werden.

Erfindungsgemäß wird der zunächst einreihige Strom stückiger Produkte in aufeinander folgende Gruppen der Produkte aufgeteilt und in diesen Produktgruppen weitergefördert. Jeweils eine derartige Produktgruppe wird dann jeweils einer der im wesentlichen parallel zueinander angeordneten Bahnen zugeführt. Dabei werden die aufeinander folgenden Produktgruppen zyklisch derart den Förderbahnen zugeführt, dass nebeneinander angeordneten Förderbahnen aufeinander folgend jeweils eine Produktgruppe zugeführt wird.

In einer weiteren bevorzugten Ausführungsform der Erfindung erfolgt das Synchronisieren der Produktströme auf den im wesentlichen parallel zueinander angeordneten Bahnen derart, dass der Produktstrom auf jeder der Bahnen derart vereinzelt wird, dass jeweils aufeinander folgende einzelne Produkte aus dem Produktstrom mit einem Abstand zueinander weitergefördert werden, und dass die Geschwindigkeit des Weiterförderns der einzelnen Produkte auf den im wesentlichen parallel zueinander angeordneten Bahnen derart gesteuert wird, dass die Produkte auf allen Bahnen am Ende der Bahnen vor der Übergabe an die Verpackungsschale Positionen derart haben, dass jedes Produkt von jeder Bahn im wesentlichen gleichzeitig, synchron mit den Produkten von den anderen Bahnen an die Verpackungsschale übergeben wird.

In einer weiteren Ausführungsform der Erfindung ist vorgesehen, dass der einreihigen Produktstrom, der auf die mehreren im wesentlichen parallel zueinander angeordneten Förderbahnen aufgeteilt wird, vorher aus den stückigen Produkten gebildet wird, die unmittelbar nach ihrer Herstellung auf mehreren, im wesentlichen parallel zueinander oder nebeneinander angeordneten Bahnen zugeführt und zu dem einreihigen Produktstrom vereinigt werden.

Bei der nachfolgend beschriebenen Ausführungsform einer erfindungsgemäßen Verpackungsmaschine werden die stückigen Produkte auf zwei Bahnen aus dem Herstellungsprozess an die Verpackungsmaschine übergeben, wobei dann dreireihige Verpackungsschalen mit den Produkten gefüllt werden.

Die erfindungsgemäße Verpackungsmaschine hat gegenüber den aus dem Stand der Technik bekannten Maschinen zum Befüllen mehrreihiger Verpackungsschalen mit stückigen Produkten den Vorteil, dass sie eine höhere Verpackungsgeschwindigkeit und somit insgesamt eine höhere Leistung aufweist.

Weitere Vorteile und Einzelheiten der Erfindung ergeben sich aus der nachfolgenden detaillierten Beschreibung eines Ausführungsbeispiels der erfindungsgemäßen Maschine anhand der beigefügten Zeichnungen.
- Fig. 1: zeigt eine Draufsicht von oben auf eine Ausführungsform der erfindungsgemäßen Verpackungsmaschine einschließlich Einrichtungen für die Zuführung der zu verpackenden stückigen Produkte von ihrer Herstellung.
- Fig. 2: ist ein Detail der Verpackungsmaschine aus Fig. 1 und zeigt die Vorrichtungen zum Aufteilen des Produktstroms auf mehrere nebeneinander angeordnete Bahnen vergrößert in drei verschiedenen Stadien.
- Fig. 3: ist ein weiteres Detail der Verpackungsmaschine aus Fig. 1 und zeigt vergrößert die Vorrichtungen zum Synchronisieren der Produktströme auf den nebeneinander angeordneten Bahnen.

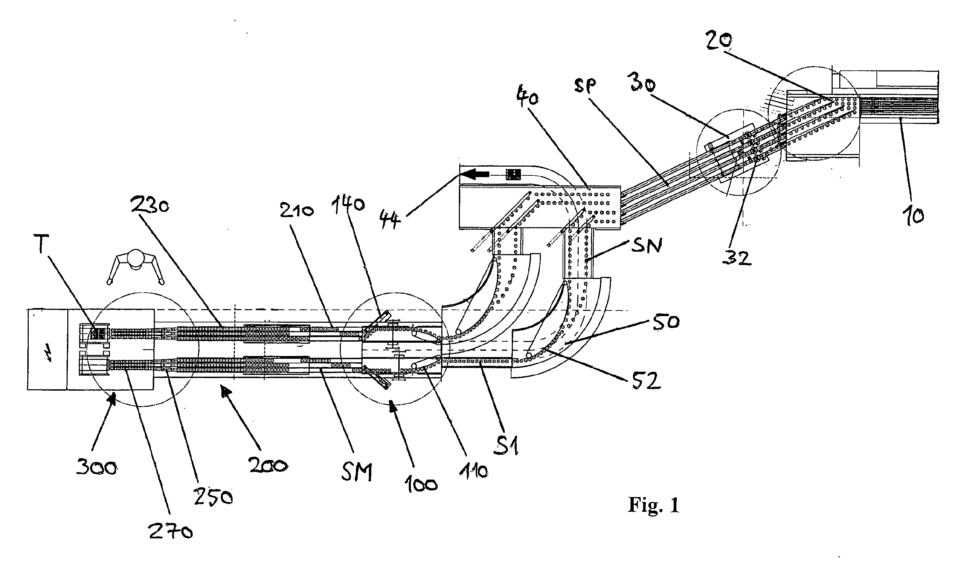

Fig. 1 zeigt eine scheinatische Gesamtansicht einer Ausführungsform einer Trayloading-verpackungsmaschine in einer Draufsicht von oben. Die stückigen Produkte, beispielsweise Kekse und dergleichen, werden von einer vorgeschalteten Produktionsanlage 10 (rechts oben in der Darstellung der Fig. 1) auf mehreren nebeneinander angeordneten Bahnen SP zu der eigentlichen Verpackungsmaschine zugeführt. Dabei werden die zugeführten Produkte zunächst durch eine Vereinigungseinrichtung 50 in einen einreihigen Produktstrom S1 vereinigt und anschließend im Maschinenbereich 100 auf mehrere nebeneinander angeordnete Förderbahnen SM aufgeteilt. In dem sich daran anschließenden Maschinenbereich 200 erfolgt sodann eine Vereinzelung und Synchronisierung der einzelnen Ströme der Produkte auf den Förderbahnen SM derart, dass die Produkte am Ende der Förderbahnen SM im Maschinenbereich 300 (Trayloading-Station) in einer jeweils von einem Produkt pro Förderbahn SM gebildeten Gruppe oder Lage im wesentlichen gleichzeitig, parallel oder synchron miteinander an die nebeneinander liegenden Reihen der Verpackungsschale (Tray) T übergeben werden können (links unten in der Darstellung der Fig. l). Die einzelnen Bereiche und Funktionen dieser Verpackungsmaschine werden nachfolgend detaillierter beschrieben.

Wie Fig. 1 darstellt, werden die stückigen Produkte mittels einer Zuführeinrichtung 20 von einer vorgeschalteten Produktionsanlage 10 für die stückigen Produkte in die Verpackungsmaschine übernommen. In der dargestellten Ausführungsform werden die Produkte auf vier nebeneinander angeordneten Produktförderbahnen SP in die Verpackungsmaschine eingeführt. Insbesondere in dem Fall, dass es sich bei den zu fördernden und zu verpackenden stückigen Produkten um Kekse handelt, beispielsweise um doppellagige Kekse, bei denen zwei kreisförmige Keksteile durch eine Füllcreme miteinander verbunden sind (sogenannte Sandwich-Cookies oder Doppelkekse), können im Anschluss an die Zuführeinrichtung 20 Kontroll- oder Inspektionseinrichtungen 30 vorgesehen sein, die für die letztlich erfolgende Befüllung der Verpackungsschale T wichtige Parameter der Produkte (Kekse) überprüfen. In dem Inspektionsbereich 30 und/oder an die Zuführeinrichtung 20 anschließend werden im Fall von Sandwich-Cookies die Produkte auf Förderbahnen SP transportiert, die mit Vertikalbändern versehen sind, an denen sich die runden Kekse im Vorbeilaufen drehen, wodurch eine Zentrierung des oberen und des unteren Kekses (Deckel) mit der dazwischen befindlichen Füllmasse erreicht oder verbessert wird.

Im Bereich der Inspektionsstrecke 30 werden die für die automatische Traybefüllung wichtigen Produktparameter überprüft, wie beispielsweise die Dicke bzw. Höhe sowie der Durchmesser der Kekse. Mittels Sensoren und/oder Kamerasystemen 32 werden die Produkte auf Beschädigungen (z.B. Bruch) überprüft und bestimmte Qualitätsparameter festgestellt. Produkte, die den Qualitätsanforderungen nicht entsprechen, werden dann mittels pneumatischer Vorrichtungen oder dergleichen aus der Förderbahn SP ausgeschleust, d.h. sie gelangen nicht in die eigentliche Verpackungsmaschine und werden somit letztlich nicht in die Verpackungstrays T gefüllt.

In der in Fig. 1 dargestellten Ausführungsform der Verpackungsmaschine werden die auf den vier nebeneinander oder parallel angeordneten Förderbahnen SP zugeführten Produkte im Anschluss an den Inspektionsbereich 30 auf zwei Anlagenteile aufgeteilt. Von den vier Zuführbahnen SP werden zwei Bahnen einem linken Anlagenteil und zwei Bahnen einem rechten Anlagenteil zugeführt, d.h. jedem der beiden Anlagenteile werden die auf zwei der vier Bahnen SP zugeführten Produkte zur Weiterförderung zugeführt. Dieser Vorgang erfolgt in der Trennvorrichtung 40. Die zwei nachfolgenden Anlagenteile sind hinsichtlich ihrer Einzelkomponenten und ihrer Arbeitsweise im wesentlichen identisch zueinander, aber sie arbeiten unabhängig voneinander. Wenn an einem der beiden Anlagenteile eine Störung auftritt, kann der andere Anlagenteil somit ungehindert weiterarbeiten. In diesem Fall wird dann nur die Hälfte des ursprünglich in die Verpackungsmaschine zugeführten Produktstroms in die Verpackungsschalen T verpackt, während die andere, für den zweiten, gestörten Anlagenteil bestimmte Hälfte des ursprünglichen Produktstroms mittels Ausgabeeinrichtungen 44 ausgeschleust wird.

Während in der vorliegenden Ausführungsform eine Aufteilung der zugeführten Produkte auf zwei Anlagenteile dargestellt ist, versteht es sich, dass in entsprechender Weise auch eine Aufteilung auf mehrere Anlagenteile erfolgen kann. Bei Verpackungsanlagen mit einer Kaskade von mehreren Verpackungsschalen-Befüllstationen (Trayloading-Stationen bzw. Trayloadern) und einer Stand-By-Maschine am Ende der Kaskade werden die Produkte bei dem Ausfall eines Trayloaders von der Stand-By-Maschine aufgenommen.

In der nachfolgenden Beschreibung wird die Verpackungsmaschine anhand eines Anlagenteils beschrieben. Da die Anlagenteile in der Regel im wesentlichen identisch zueinander sind, versteht es sich, dass diese Beschreibung somit auch für die weiteren derartigen Anlagenteile der gesamten Verpackungsmaschine entsprechend gilt.

Im Anschluss an die Trennvorrichtung 40, die die insgesamt zugeführten Produkte in der vorliegenden Ausführungsform auf zwei Anlagenteile aufteilt, werden die Produkte somit auf zwei Bahnen SN weiter und in den betreffenden Anlagenteil hinein gefördert. In der nachfolgenden Vereinigungseinrichtung 50 werden die Produkte von den zwei im wesentlichen parallel zueinander oder nebeneinander laufenden Förderbahnen SN dann auf eine Bahn S1 vereinigt. Zweck dieser Maßnahme ist es, einen lückenlosen, kontinuierlichen, einreihigen Produktstrom S1 zu erhalten.

Für diese Vereinigung der Produkte von den zwei Bahnen SN auf eine Bahn bzw. zu dem einreihigen Produktstrom S1 wird mittels einer Kurvenfördereinrichtung 50 das sogenannte "Drängelprinzip" angewendet. In der konkreten Ausführungsform der Fig. 1 werden die Produkte (Cookies) auf den beiden Bahnen SN zunächst durch eine Schikane, z.B. ein Vertikalband, auf einen geringen Abstand gebracht und dann einem Kurvenband 52 auf dem Innenradius zugeführt. Durch eine auf dem Kurvenband 52 angebrachte Schikane, z.B. ein gekrümmtes Vertikalband, werden die Cookies dann zum Außenradius des Kurvenbands geleitet. Die dadurch gegebene Zunahme der Geschwindigkeit und der seitliche Druck auf die Cookies führen dazu, dass die beiden Produktbahnen SN zu einer Bahn S1 vereinigt werden.

Um die Vereinigung der Bahnen in der vorliegenden Ausführungsform sicher zu gestalten, ist die Geschwindigkeit am Außenradius des Kurvenbands größer als es für einen lückenlosen einreihigen Strom von Cookies erforderlich wäre. Da für die nachfolgenden Prozessschritte eine hohe Transportgeschwindigkeit nachteilig ist, wird der Strom der Cookies anschließend durch eine weitere Schikane wieder auf den Innenradius des Kurvenbands geleitet, und zwar auf denjenigen Radius, an dem genau die für einen lückenlosen einreihigen Produktstrom erforderliche Geschwindigkeit herrscht.

Am Ausgang der Vereinigungseinrichtung (insbesondere Kurvenfördereinrichtung) 50 liegt somit ein einreihiger kontinuierlicher lückenloser Produktstrom S1 vor. Im nachfolgenden Verfahrensschritt wird dieser einreihige Produktstrom dann auf mehrere, im wesentlichen parallel zueinander oder nebeneinander angeordnete Bahnen SM aufgeteilt, auf denen die Produkte dann weiter gefördert werden. Im vorliegenden, in den Figuren dargestellten Fall sind drei Förderbahnen SM1, SM2, SM3 nebeneinander angeordnet. Die Anzahl der Bahnen entspricht dabei der Anzahl der am Ende gleichzeitig mit den Produkten zu befüllenden Reihen (Kavitäten) der Verpackungsschale (Tray) T. Es versteht sich, dass auch jede andere, für einen konkreten Anwendungsfall geeignete und gewünschte Anzahl nebeneinander angeordneter Bahnen SM entsprechend einer Anzahl der zu befüllenden Reihen der Verpackungsschale vorgesehen sein kann.

Die Aufteilung des einreihigen kontinuierlichen Produktstroms S1 auf die mehreren parallel zueinander angeordneten Bahnen SM bzw. SM1, SM2, SM3 erfolgt, indem der Produktstrom S1 zunächst in aufeinander folgende, aus einzelnen stückigen Produkten P gebildete Gruppen PG aufgeteilt und diese Produktgruppen PG dann weitergefördert werden, und indem dann anschließend jeweils eine Produktgruppe PG zu jeweils einer der parallel zueinander angeordneten Bahnen SM1, SM2, SM3 zugeführt wird.

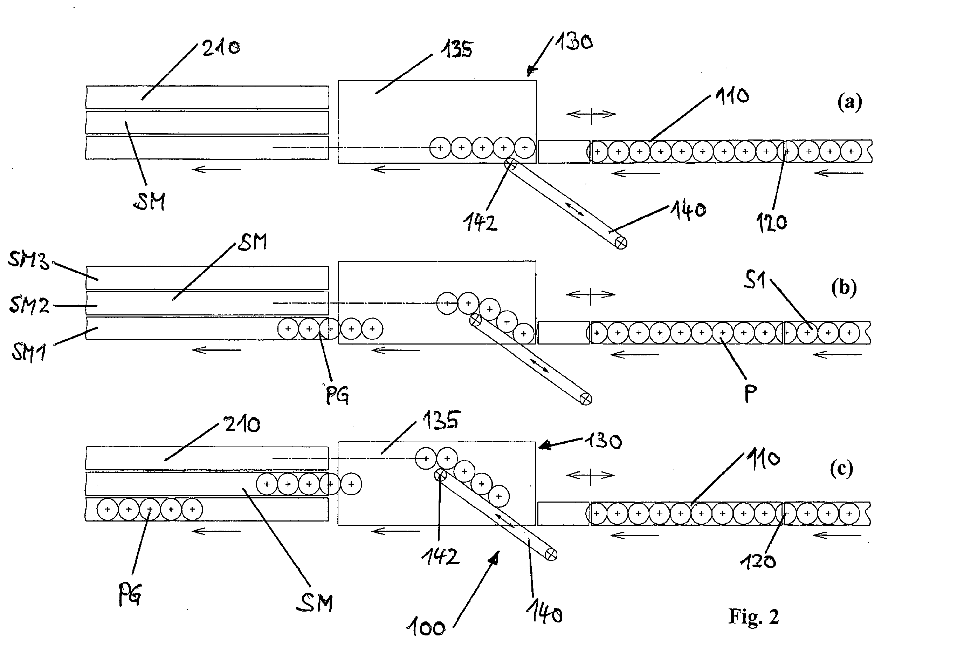

Wie Fig. 1 und in einer vergrößerten Darstellung insbesondere Fig. 2 zeigen, sind Fördereinrichtungen 100 zum Aufteilen des einreihigen Produktstroms S1 in die Produktgruppen PG und zum Weiterfördern des Produktstroms in Form der Produktgruppen PG vorgesehen. Diese Fördereinrichtungen 100 umfassen dabei zunächst ein Förderband, insbesondere ein sogenanntes Pull-Nose-Band 110, sowie eine oder mehrere Einrichtungen 120 zum Zählen der stückigen Produkte P, um die Produktgruppen PG aus dem einreihigen Produktstrom S1 aus einer vorgegebenen Anzahl stückiger Produkte P und mit einem vorgegebenen Abstand voneinander zu bilden. Das Pull-Nose-Band 110 kann dabei z.B. ein in Förderrichtung des Produktstroms förderndes Förderband sein, das als ganzes parallel zur Förderrichtung des Produktstroms hin und her bzw. vor und zurück beweglich ist.

Wie Fig. 2 in den drei Teildarstellungen (a), (b) und (c) zeigt (die drei unterschiedliche Stadien der Aufteilvorrschtungen 100 und insbesondere einer Verteileinrichtung 130 zeigen), wird der einreihige, kontinuierliche Produktstrom S1 (in den drei Teildarstellungen der Fig. 2 jeweils von rechts kommend) einem als ganzes hin und her beweglichen Förderband, einem sogenannten Pull-Nose-Band 110 zugeführt, auf dem die Produktgruppen PG mit einem definierten Abstand voneinander gebildet werden. Die Funktionsweise eines solchen Pull-Nose-Bands ist prinzipiell bekannt, wobei ein solches Band typischerweise zyklisch im gleichen Takt arbeitet. Anders als bei den bekannten Bändern wird das vorliegende Pull-Nose-Band 110 jedoch nicht nach einem festen Zeitraster getaktet. Vielmehr erfolgt die Taktung des Pull-Nose-Bands 110 hier derart, dass Gruppen PG mit einer vorgegebenen Anzahl einzelner Produkte P (z.B. Cookies) erzeugt werden.

Hierzu ist im wesentlichen in der hinteren Position des Pull-Nose-Bands 110 (in Fig. 2 jeweils in der rechts angeordneten Stellung) bzw. am oder im Bereich des hinteren Endes des Pull-Nose-Bands 110 eine Lichtschranke oder vergleichbare Zähleinrichtung 120 angeordnet, die die aus dem kontinuierlichen Produktstrom S1 (von rechts nach links in den Zeichnungen) durchlaufenden Produkte zählt. Nachdem die Zähleinrichtung 120 die für eine Produktgruppe PG vorgegebene Anzahl der Produkte P gezählt hat, nimmt das Pull-Nose-Band diese Gruppe PG auf, indem es beispielsweise als ganzes in die hintere (in der Zeichnung rechte) Position fährt. Das Pull-Nose-Band bleibt dann so lange in dieser hinteren Position stehen, bis die gewünschte Anzahl von Produkten P diese Stelle passiert hat. Sobald die Zähleinrichtung 120 die gewünschte Anzahl der Produkte P gezählt hat, fährt das Pull-Nose-Band 110 als ganzes in Förderrichtung nach vorne (d.h. in den Zeichnungen nach links), wobei es die gezählte Anzahl der Produkte P mitnimmt und dadurch die Gruppe PG mit der gewünschten Anzahl der Produkte erzeugt. Gleichzeitig beginnt die Zähleinrichtung 120, d.h. der mit der Lichtschranke gekoppelte Zähler, mit der Zählung der durchlaufenden Produkte P für die nächste Gruppe PG. Das Pull-Nose-Band 110 der vorliegenden Ausführungsform arbeitet somit anders als die im Stand der Technik bekannten Pull-Nose-Bänder, die zyklisch immer im gleichen zeitlichen Takt arbeiten.

Das Pull-Nose-Band 110 der vorliegenden Ausführungsform hat insbesondere folgende Zwecke: Bei der Anlage der vorliegenden Ausführungsform werden in vorgeschalteten Prozessschritten die Produkte (Cookies) P auf bestimmte Qualitätsmerkmale hin überprüft und bei Qualitätsmängeln aus dem kontinuierlichen Fluss ausgeschleust (wie oben u.a. in Zusammenhang mit dem Inspektionsbereich 30 erläutert wurde). Dadurch können mehr oder weniger große Lücken im Produktfluss entstehen, d.h. der dem Pull-Nose-Band 110 zugeführte einreihige Produktstrom S1 kann Lücken enthalten. Wenn das Pull-Nose-Band rein zeitgesteuert arbeiten würde, würden dann Gruppen PG mit unterschiedlicher Anzahl von Produkten P gebildet werden. Dieses würde auf den nachfolgenden Bahnen SM, die letztlich dem Trayloader (Befüllung der Verpackungsschale) zugeführt werden, zu unterschiedlichen Füllständen führen, was somit zu einer ungleichmäßigen Befüllung der Reihen der Verpackungsschale T führen würde und daneben weitere Nachteile hätte. Bei der vorliegenden Ausführungsform bleibt das Pull-Nose-Band 110 jedoch in der hinteren Stellung stehen, bis die erforderliche Anzahl von Produkten P für die Produktgruppe PG erreicht wurde. Dieses gewährleistet also, dass die weiter geförderten Produktgruppen PG immer die gleiche Anzahl einzelner Produkte P haben. Die im Produktstrom vorher eventuell bestehenden Lücken werden damit behoben oder "ausgeblendet".

Das Pull-Nose-Band 110 der vorliegenden Ausführungsform hat darüber hinaus den Zweck, dass auch variable Größen der Produktgruppen PG gezielt erzeugt werden können. Diese Funktion wird ggf. verwendet, um die Füllstände der nachfolgenden Bahnen auszugleichen, wenn diese aus bestimmten Gründen, z.B. aufgrund des Eingriffs einer Bedienungsperson, voneinander abweichen. Von der übergeordneten Steuerung der Anlage wird in Verbindung mit der installierten Sensorik der Füllstand der Bahnen SM, die dem Trayloader zugeführt werden, überwacht. Weichen die Füllstände mehr als zulässig voneinander ab, wird das Pull-Nose-Band so gesteuert, dass Bahnen mit niedrigem Füllstand größere Produktgruppen zugewiesen werden.

Im Anschluss an die Gruppenbildung durch das Pull-Nose-Band 110 werden die Produktgruppen PG dann jeweils einer der nachfolgenden, parallel zueinander bzw. nebeneinander angeordneten Bahnen SM1, SM2, SM3 zugeführt, und zwar insbesondere derart, dass aufeinander folgende Produktgruppen PG zyklisch derart den Bahnen SM1, SM2, SM3 zugeführt werden, dass nebeneinander angeordneten Bahnen aufeinander folgend jeweils eine Produktgruppe PG zugeführt wird.

Die auf das Pull-Nose-Band 110 folgende Verteileinrichtung 130 weist dafür ein im wesentlichen quer oder schräg zu der Förderrichtung des Produktstroms verschiebbares Ablenkband 140 auf, das jeweils eine der von dem Pull-Nose-Band 110 zugeführten Produktgruppen PG nacheinander jeweils der nächsten der nebeneinander angeordneten Förderbahnen SM1, SM2, SM3 zuführt.

Wie Fig. 2 in den drei dargestellten verschiedenen Stadien zeigt, werden die von dem Pull-Nose-Band 110 gebildeten Produktgruppen PG in der Verteileinrichtung 130 einem in der Haupttransportrichtung fördernden Förderband 135 zugeführt, auf dem sich ein Ablenkband 140 befindet, insbesondere ein als Vertikalband ausgebildetes Schikanenband mit verschiebbarer Umlenkkante 142. Das Ablenkband 140 ist unter einem bestimmten Winkel (z.B. ca. 30°) zur Transportrichtung der Produkte P auf dem Förderband 135 geneigt. Die Position der Umlenkkante 142 wird von der übergeordneten Steuerung mittels eines Servomotors auf eine der drei Bahnen SM1, SM2, SM3 positioniert, d.h. die Umlenkkante 142 des Schikanenbands 140 wird (bei der Ansicht von oben gemäß Fig. 2) seitliche im wesentlichen schräg oder quer zu der Förderrichtung des Förderbands 135 jeweils auf die Position bzw. Höhe einer der drei Bahnen SM1, SM2, SM3 verschoben. Die von dem Pull-Nose-Band 110 kommenden und auf dem Förderband 135 weiter geförderten Produkte P (bzw. jeweils eine gesamte Produktgruppe PG) treffen dann auf das Ablenkband 140 und laufen an diesem entlang (bzw. werden von diesem gefördert), bis sie dieses an seinem Ende (Umlenkkante 142) verlassen, wo sie in der dadurch erreichten seitlichen Position von dem Förderband 135 dann in der Haupttransportrichtung weiter gefördert werden. Dadurch werden die Produkte P bzw. Produktgruppen PG jeweils auf diejenige der nachfolgenden Förderbahnen SM1, SM2, SM3 geleitet, die der jeweiligen seitlichen Einstellung bzw. Verschiebung des Ablenkbands 140 bzw. Position seiner Umlenkkante 142 entspricht.

Nachdem eine Gruppe PG der Produkte P das Ablenkband 140 verlassen hat, wird die Umlenkkante 142 des Ablenkbands 140 seitlich verschoben und auf die nächste Bahn der nebeneinander angeordneten Bahnen SM positioniert. Auf diese Weise werden die Produktgruppen PG nacheinander auf die aufeinander folgenden Bahnen SM1, SM2 und SM3 geleitet (entsprechend den Stadien (a), (b) und (c) der Fig. 2). Nachdem eine Produktgruppe PG der letzten der nebeneinander angeordneten Bahnen SM zugeführt wurde, in der vorliegenden Ausführungsform also der Bahn SM3 (Stadium (c) in Fig. 2), läuft das Ablenkband 140 bzw. seine verschiebbare Umlenkkante 142 zurück in die erste Position (Stadium (a) in Fig. 2), in der nunmehr die erste der nebeneinander angeordneten Bahnen SM mit der anstehenden nächsten Produktgruppe PG gefüllt wird, in der vorliegenden Ausführungsform also die Bahn SM1, womit der Zyklus der seitlichen Ablenkung der Produktgruppen PG in der Verteileinrichtung 130 mit einer entsprechenden aufeinander folgenden Befüllung der Bahnen SM1, SM2 und SM3 von vorne beginnt.

In einer besonderen Ausführungsform der Verteileinrichtung 130 kann es bei hohen Durchsatzleistungen vorkommen, dass die zeitliche Lücke zwischen zwei aufeinander folgenden Produktgruppen PG nicht für die Positionierung der Umlenkkante 142 des Ablenkbands 140 auf die jeweils nächste Bahn SM1, SM2, SM3 ausreicht. Die Gründe hierfür können in Begrenzungen durch mechanische Bauelemente oder den Antrieb liegen. In diesem Fall wird durch das Ablenkband 140 vorzugsweise nur eine Vorverteilung der Produktgruppen PG realisiert, d.h. die Gruppen werden nicht auf die endgültige Position für die nachfolgende Bahn gebracht sondern nur so weit auf Abstand gebracht, dass in einer nachfolgenden Stufe die endgültige Positionierung erfolgen kann. Diese nachfolgende Stufe kann zum Beispiel starre Ablenk- oder Schikanenbänder oder bewegliche "Paddel"' umfassen.

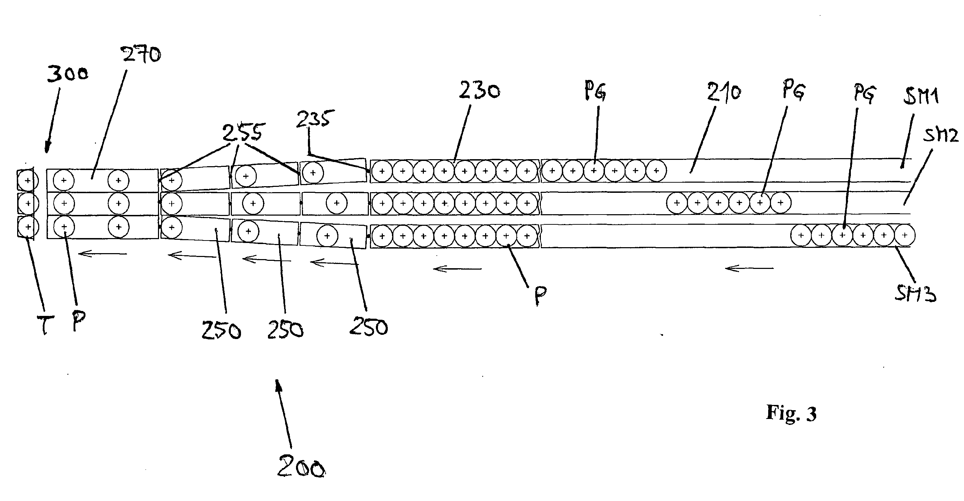

Nachdem die aufeinander folgenden Produktgruppen PG auf die nebeneinander angeordneten Bahnen SM aufgeteilt worden sind, erfolgt ein Synchronisieren der einzelnen Ströme der Produkte P bzw. Produktgruppen PG auf den Bahnen SM1, SM2, SM3 miteinander so, dass letztlich jeweils ein Produkt P von einer Bahn im wesentlichen gleichzeitig mit jeweils einem Produkt von den anderen Bahnen in der Übergabevorrichtung 300 an die Verpackungsschale (Tray) T übergeben werden kann. Dieser Synchronisiervorgang ist in Fig. 3 dargestellt.

Dieser Verfahrensschritt des Synchronisierens umfasst zum einen den Schritt des Vereinzelns des Produktstroms auf jeder der Bahnen SM1, SM2, SM3 derart, dass jeweils aufeinander folgende einzelne Produkte P aus dem Produktstrom mit einem Abstand zueinander weitergefördert werden, sowie den Schritt des Steuerns der Geschwindigkeit des Weiterförderns der einzelnen Produkte P auf den im wesentlichen parallel zueinander angeordneten Bahnen SM1, SM2, SM3 derart, dass die Produkte P auf allen Bahnen am Ende der Bahnen Positionen derart haben, dass jedes Produkt P von jeder Bahn SM1, SM2, SM3 im wesentlichen gleichzeitig mit den Produkten P von den anderen Bahnen an die Verpackungsschale T übergeben wird.

Wie Fig. 3 zeigt, umfassen die Vorrichtungen 200 zum Synchronisieren der Produktströme auf den parallel zueinander angeordneten Bahnen SM1, SM2, SM3 mehrere in Förderrichtung hintereinander angeordnete Fördereinrichtungen, die in jeder der Bahnen SM1, SM2, SM3 gleichermaßen vorhanden und entsprechend parallel zueinander bzw. nebeneinander angeordnet sind. Diese Fördereinrichtungen umfassen Lückenschließförderbänder (Gap Closing Belts) 210, Zuführförderbänder (Feeding Belts) 230, Einzelförderbänder (Smart Belts) 250 und Übergabeförderbänder (Infeed Belts) 270. In der in Fig. 3 dargestellten Ausführungsform sind diese Fördereinrichtungen in der zuvor genannten Reihenfolge in Förderrichtung des Produktstroms hintereinander angeordnet. Die jeweiligen Förderbänder der parallel zueinander angeordneten Bahnen SM1, SM2, SM3 sind identisch zueinander, und sie können in der Praxis weitere erforderliche oder vorteilhafte Komponenten aufweisen, wie Seitenführungen, Abdeckungen und Sensoreinrichtungen.

Wie Fig. 3 zeigt, sind vor den oder am Eingang der Synchronisiervorrichtungen 200 zunächst Lückenschließförderbänder (Gap Closing Belts) 210 vorgesehen, die sich direkt an die zuvor beschriebene Verteileinrichtung 130 anschließen. Die von der Verteileinrichtung 130 gebildeten und zugeführten Produktgruppen PG werden somit auf die Lückenschließförderbänder 210 geleitet. Diese Lückenschließförderbänder 210 dienen dazu, die aufgenommenen Produktgruppen PG auf das Ende des Produktstroms stromabwärts (d.h. in der Darstellung der Fig. 3 nach links) lückenlos aufzuschließen. Durch die Lückenschließförderbänder 210 wird auf jeder der Bahnen SM1, SM2, SM3 somit ein lückenloser Strom von Produkten P aus den zuvor gebildeten einzelnen Produktgruppen PG gebildet.

Die Lückenschließförderbänder 210 gehen an ihrem Ende stromabwärts in die Zuführförderbänder (Feeding Belts) 230 über bzw. schließen sich die Zuführförderbänder 230 stromabwärts an die Lückenschließförderbänder 210 an. Der auf den Lückenschließförderbändern 210 gebildete lückenlose Produktstrom wird somit an die Zuführförderbänder 230 übergeben und dort stromabwärts weitergefördert. Die Grundgeschwindigkeit der Zuführförderbänder 230 entspricht der Leistung der gesamten Verpackungsanlage, d.h. an der Abgabeseite werden pro Zeiteinheit so viele Produkte P abgegeben, wie es der Anlagenleistung entspricht.

Sofern die Zuführförderbänder (Feeding Belts) 230 mit einer konstanten, ungeregelten Geschwindigkeit arbeiten, liegen die theoretisch gleichzeitig an die Verpackungsschale T abzugebenden Produkte P in der Regel nicht auf einer Linie, was durch Toleranzen der Produkte auf den verschiedenen Bahnen sowie andere Einflüsse bedingt sein kann. Die Asynchronität zwischen den Produkten P kann dabei so groß sein, dass auch mit den nachfolgenden Einzelförderbändern (Smart Belts) 250 kein hinreichender Ausgleich mehr erzielt werden kann. Dieses würde dann zu Störungen bei der Übergabe der Produkte P an die Verpackungsschale T (Trayloading) führen.

Aus diesem Grunde werden die Zuführförderbänder 230 mittels geeigneter Steuereinrichtungen geregelt. Diese Steuereinrichtungen umfassen Sensoren 235, die an der Abgabeposition der Zuführförderbänder 230 angeordnet sind. Die Sensoren 235 ermitteln die Lage der Produkte P (insbesondere in Förderrichtung) bei der Übergabe an die nachfolgenden Einzelförderbänder 250. Von einer übergeordneten Steuerungseinrichtung wird die Geschwindigkeit der Zuführförderbänder 230 dann so geregelt, dass eine ggf. gegebene, zu große Lageabweichung der Produkte bei der Abgabe von den Zuführförderbändern 230 reduziert wird, so dass die Lageabweichung der Produkte P (in Förderrichtung) auf jeder der parallel zueinander angeordneten Bahnen SM1, SM2, SM3 innerhalb einer zulässigen Toleranz liegt.

An die Zuführförderbänder (Feeding Belts) 230 schließen sich stromabwärts die Einzelförderbänder (Smart Belts) 250 an. Bei dem Übergang von den Zuführförderbändern 230 auf die Einzelförderbänder 250 wird der auf den Zuführförderbändern 230 vorliegende lückenlose Produktstrom vereinzelt, d.h. in der Folge werden die Produkte P aus dem Produktstrom jeweils einzeln aufeinander folgend mit einem Abstand zueinander weitergefördert. Bei dem Übergang der Produkte P von den Zuführförderbändern 230 auf die nachfolgenden Einzelförderbänder 250 wird in Transportrichtung ein bestimmter Abstand zwischen den Produkten P hergestellt. Dieses erfolgt durch einen Geschwindigkeitssprung zwischen den Zuführförderbändern 230 und den Einzelförderbändern 250, d.h. das auf die Zuführförderbänder 230 folgende, erste Einzelförderband 250 hat eine höhere Geschwindigkeit als das Zuführförderband 230. Bei diesem Geschwindigkeitssprung entstehen jedoch Lageabweichungen zwischen den aufeinander folgenden einzelnen Produkten P auf den parallelen Bahnen SM1, SM2, SM3 in Förderrichtung, d.h. die einzelnen Produkte auf den nebeneinander angeordneten Bahnen befinden sich nicht auf einer Linie bzw. nicht auf der gleichen Höhe oder Position in Förderrichtung, d.h. sie sind nicht ausreichend parallel zueinander oder nebeneinander angeordnet.

Die Aufgabe der in Förderrichtung nachfolgenden weiteren Einzelförderbänder (Smart Belts) 250 ist es somit, diese Lageabweichungen auf ein vorgegebenes, zulässiges Maß zu reduzieren. Die Länge bzw. Förderstrecke und/oder die Geschwindigkeit der einzelnen Einzelförderbänder 250 ist vorzugsweise so bemessen, dass zu jedem Zeitpunkt immer nur ein Produkt P auf einem einzelnen Einzelförderband 250 liegt. Beim Übergang der Produkte P einerseits von den Zuführförderbändern 230 auf die Einzelförderbänder 250 und andererseits beim Übergang von einem ersten Einzelförderband auf das nächste, nachfolgende Einzelförderband werden die Positionen der Produkte P auf den Förderbändern und insbesondere die Lagedifferenzen mittels Sensoreinrichtungen, insbesondere mittels optischer Sensoren, gemessen. Mittels einer übergeordneten Steuerungseinrichtung werden die einzelnen Förderbänder dann so gesteuert, dass die Lagedifferenzen zwischen den einzelnen Produkten P auf den parallel zueinander angeordneten Bahnen SM1, SM2, SM3 über die Förderstrecke verringert werden, so dass die jeweils zusammengehörenden Produkte P der nebeneinander angeordneten Bahnen SM1, SM2, SM3 am Ende der Förderstrecke miteinander ausgerichtet sind und möglichst parallel zueinander bzw. auf einer Linie liegen. Zu diesem Zweck wird eine ideale Lage der Produkte berechnet und als Sollwert vorgegeben, wobei die Einzelförderbänder 250 dann so geregelt werden, dass diejenigen Bänder, deren Produkte gegenüber dieser idealen Lage voreilen, um ein geeignetes Maß verzögert werden. Demgegenüber werden diejenigen Einzelförderbänder, deren Produkte gegenüber der idealen Lage zurückbleiben, um ein geeignetes Maß beschleunigt.

Da, wie oben gesagt, jeweils nur ein Produkt P in Förderrichtung auf jeweils einem Einzelförderband 250 liegt und die Einzelförderbänder 250 somit nur eine relativ kurze Länge bzw. Förderstrecke haben, lässt sich mit jeder Stufe der Einzelförderbänder 250 jeweils nur eine bestimmte, begrenzte Verbesserung der Lageabweichungen der Produkte P erreichen. Aus diesem Grunde müssen mehrere Stufen der Einzelförderbänder 250 hintereinander geschaltet (kaskadiert) werden, und es werden je nach Anwendungsfall so viele Einzelförderbandstufen kaskadiert, wie es jeweils zum Erreichen der möglichst idealen Lage der Produkte P, d.h. einer möglichst geringen Abweichung der tatsächlichen Lage von der idealen Lage, innerhalb vorgegebener Toleranzen erforderlich ist. Am Ende der Kaskade der Einzelförderbänder 250 sollten die Produkte P dann eine Lage in Förderrichtung und parallel nebeneinander haben, die der idealen Lage der Produkte auf einer Linie senkrecht zur Förderrichtung möglichst nahe kommt. Diese Situation ist in Fig. 3 am linken Ende der Förderstrecke dargestellt.

Von den Einzelförderbändern 250 werden die somit im wesentlichen parallel zueinander ausgerichteten Produkte P dann an Übergabeförderbänder (Infeed Belts) 270 übergeben, von denen sie synchron auf parallelen Bahnen zur Verpackungsschalen-Befüllstation (Trayloading-Station) 300 transportiert und abschließend in die Verpackungsschale (Tray) T befördert werden. In der Trayloading-Station 300 wird somit jeweils ein Produkt P von jeweils einer der Bahnen SM1, SM2, SM3 gleichzeitig mit jeweils einem Produkt P von den jeweils anderen Bahnen an jeweils eine Reihe der mehreren, nebeneinander angeordneten Reihen der Verpackungsschale T übergeben. Jede Reihe der Verpackungsschale T wird somit gleichzeitig mit einem Produkt P befüllt, d.h. eine Lage oder Gruppe von Produkten P wird gleichzeitig oder zumindest innerhalb eines zulässigen Toleranzbereichs in die Verpackungsschale T gefüllt, wobei die Lage der Produkte P aus den nebeneinander angeordneten einzelnen Produkten P gebildet ist, die von den parallel zueinander angeordneten Förderbahnen SM zugeführt werden.

Nach dem Befüllen der Verpackungsschale T mit einer Lage von Produkten P wird die Verpackungsschale T in der Trayloading-Station 300 um eine Position weiterbewegt oder weitergetaktet, um die nächste zugeführte Lage der Produkte P aufnehmen zu können. Die Verpackungsschale T muss dabei um eine Länge derart weiterbewegt werden, dass sie die nächste anstehende Lage der Produkte P im Anschluss an die vorhergehende Lage aufnehmen kann. Bei der Zufuhr der Produkte P über die Übergabeförderbänder 270 muss dabei zwischen den aufeinander folgenden Lagen ein Mindestabstand gegeben sein, der für die Weiterbewegung und Positionierung der Verpackungsschale T zur Aufnahme der nächsten Lage der Produkte P ausreichend ist.

Da die Produkte P kontinuierlich von den Förderbahnen SM an die Übergabestation 300 zugeführt werden, müssen eine kontinuierliche Befüllung der Verpackungsschalen T sowie ein kontinuierlicher Abtransport der vollständig gefüllten Verpackungsschalen realisiert werden, um den Produktfluss nicht zu stoppen. Dabei muss die kontinuierliche Befüllung insbesondere auch ohne Unterbrechung fortgesetzt werden, wenn eine Verpackungsschale T vollständig gefüllt ist und anschließend eine nächste Verpackungsschale gefüllt wird. Die Bereitstellung der Verpackungsschalen T in der Befüllstation 300 muss dafür insbesondere derart erfolgen, dass eine erste, vollständig befüllte Verpackungsschale T und eine nachfolgende leere, als nächstes zu befüllende Verpackungsschale T derart angeordnet sind und jeweils um eine Position derart weiterbewegt, werden, dass eine nächste Gruppe oder Lage der einzelnen Produkte P von den parallel zueinander angeordneten Bahnen SM in die Reihen der nächsten, anstehenden leeren Verpackungsschale T übergeben werden kann, nachdem die vorhergehende Lage oder Gruppe der einzelnen Produkte P in die Reihen der vorhergehenden, nunmehr vollständig gefüllten Verpackungsschale T übergeben wurde. Dabei muss gewährleistet sein, dass eine kontinuierliche Befüllung der Verpackungsschalen T erfolgt, ohne dass der Produktstrom unterbrochen wird.

Die Verpackungsschalen (Trays) T werden typischerweise gestapelt bereitgestellt und nach ihrer Separierung in einen Tray-Manipulator gebracht, der die Trays in die Befüllstation 300 bringt und dort getaktet weiterbewegt. Vollständig befüllte Trays werden von dem Tray-Manipulator dann aus der Befüllstation 300 entfernt und (z.B. über eine Abgaberutsche) an ein nachfolgendes Fördersystem zur weiteren Verarbeitung und insbesondere weiteren Verpackung übergeben. Der Tray-Manipulator kann beispielsweise durch eine Kette oder einen Zahnriemen mit Mitnehmern, beispielsweise als Gliederkettenförderer, ausgebildet sein.

Die im Stand der Technik bekannten Tray-Manipulatoren sind typischerweise so ausgebildet, dass aufgrund baulicher Randbedingungen die Position, in der ein neues, leeres Tray in den Tray-Manipulator eingesetzt wird, einen gewissen Abstand von der Befüllstation hat. Nachdem ein Tray vollständig befüllt worden ist, muss der Tray-Manipulator das befüllte Tray aus der Befüllstation entfernen und das nächste, leere Tray in die Befüllstation bringen. Bei den im Stand der Technik bekannten Ausführungsformen musste der Produktstrom während dieser Zeit angehalten werden. Dieses bringt somit die Nachteile mit sich, dass Leistungseinbußen aufgrund der Stillstandszeiten gegeben sind, und dass des weiteren die Produkte P durch zusätzliche Maßnahmen auf den Übergabeförderbändern (Infeed Belts) 270 fixiert werden müssen, wofür häufig ein Unterdruck (Vakuum) verwendet wird. Hierdurch entstehen zusätzliche Energiekosten sowie Wartungskosten und Stillstandszeiten für die Reinigung der Unterdruckeinrichtungen. Die aus dem Stand der Technik bekannten Tray-Manipulatoren sind daher für einen kontinuierlichen, ununterbrochenen Produktstrom und mithin für die Zwecke der vorliegende Erfindung nicht geeignet.

Der Tray-Manipulator der vorliegenden Erfindung ist daher als mehrzügige Fördereinrichtung, insbesondere als sogenannter mehrzügiger Race-Track ausgeführt. Während ein Zug dieser Fördereinrichtung das Tray in der Befüllstation getaktet weiterbewegt, wird das nächste anstehende Tray in ein Fach eines zweiten Zuges der mehrzügigen Fördereinrichtung eingesetzt, wobei dieses nächste Tray direkt im Anschluss an das vorhergehende Tray in der Befüllstation positioniert wird. Nach dem vollständigen Befüllen des ersten Trays steht das nächste Tray somit ohne Zeitverzug und ohne räumlichen Abstand zu dem vorhergehenden Tray in der Befüllstation bereit. Dadurch kann der Befüllvorgang ohne Unterbrechung fortgesetzt werden und der Strom der in der Befüllstation 300 ankommenden Produkte P muss nicht angehalten werden.

Insgesamt wird somit eine Verpackungsmaschine geschaffen, bei der ein Befüllen mehrreihiger Verpackungsschalen mit stückigen Produkten mit hoher Geschwindigkeit, d.h. mit hoher Maschinenleistung, bewerkstelligt wird.

### Bezugszeichenliste

- 10: Produktionsanlage für stückige Produkte
- 20: Zuführeinrichtung
- 30: Inspektionsbereich/-einrichtung
- 32: Sensor / Kamera
- 40: Trennvorrichtung
- 44: Ausgabeeinrichtung
- 50: Vereinigungseinrichtung / Kurvenfördereinrichtung
- 52: Kurvenband

- 100: Vorrichtungen zum Aufteilen des einreihigen Produktstroms / Fördereinrichtungen
- 110: hin/her bewegliches Förderband (Pull-Nose-Band)
- 120: Zähleinrichtung
- 130: Verteileinrichtung
- 135: Förderband
- 140: Ablenkband / Schikanenband / Vertikalband
- 142: Umlenkkante

- 200: Vorrichtungen zum Synchronisieren der Produktströme
- 210: Lückenschließförderband (Gap Closing Belt)
- 230: Zuführförderband (Feeding Belt)
- 235: Sensor
- 250: Einzelförderband (Smart Belt)
- 255: Sensor
- 270: Übergabeförderband (Infeed Belt)

- 300: Vorrichtungen zum Übergeben der Produkte an Verpackungsschale / Trayloading-Station

- T: Verpackungsschale (Tray)
- P: stückiges Produkt (Keks etc.)
- PG: Produktgruppe

- SP: (Förder-)Bahnen von Produktionsanlage
- SN: (Förder-)Bahnen
- S1: einreihiger Produktstrom
- SM; SM1, SM2, SM3: parallel zueinander angeordnete (Förder-)Bahnen

## Patentansprüche

1. Verfahren zum Befüllen einer mehrreihigen Verpackungsschale (T) mit stückigen Produkten (P), mit folgenden Schritten:
- Aufteilen (100) eines einreihigen Stroms (S1) stückiger Produkte (P) auf mehrere im wesentlichen parallel zueinander angeordnete Bahnen (SM; SM1, SM2, SM3) zum Weiterfördern der Produkte (P);
- Synchronisieren (200) der einzelnen Ströme der Produkte (P) auf den mehreren Bahnen (SM; SM1, SM2, SM3) miteinander so, dass jeweils ein Produkt (P) von einer Bahn (SM1, SM2, SM3) im wesentlichen gleichzeitig mit jeweils einem Produkt (P) von den anderen Bahnen (SM1, SM2, SM3) an die Verpackungsschale (T) übergeben werden kann; und
- Übergeben (300) der Produkte (P) an die Verpackungsschale (T), wobei jeweils ein Produkt (P) von einer Bahn (SM1, SM2, SM3) an eine Reihe der Verpackungsschale (T) übergeben wird;
**dadurch gekennzeichnet, dass** der Schritt des Aufteilens des Produktstroms (S1) folgende Schritte umfasst:
- Aufteilen (110) des einreihigen Produktstroms (S1) in aufeinander folgende Gruppen (PG) der stückigen Produkte (P) und Weiterfördern der Produktgruppen (PG);
- Verteilen der gebildeten, aufeinander folgenden Produktgruppen (PG) durch Zuführen (130) jeweils einer Produktgruppe (PG) zu jeweils einer der im wesentlichen parallel zueinander angeordneten Bahnen (SM1, SM2, SM3).

2. Verfahren nach Anspruch 1, **dadurch gekennzeichnet, dass** die aufeinander folgenden Produktgruppen (PG) zyklisch derart den Bahnen (SM1, SM2, SM3) zugeführt werden, dass nebeneinander angeordneten Bahnen aufeinander folgend jeweils eine Produktgruppe (PG) zugeführt wird.

3. Verfahren nach einem der Ansprüche 1 oder 2, **dadurch gekennzeichnet, dass** der Schritt des Synchronisierens der Produktströme auf den im wesentlichen parallel zueinander angeordneten Bahnen (SM1, SM2, SM3) folgende Schritte umfasst:
- Vereinzeln (230, 250) des Produktstroms auf jeder Bahn (SM1, SM2, SM3) derart, dass jeweils aufeinander folgende einzelne Produkte (P) aus dem Produktstrom mit einem Abstand zueinander weitergefördert werden;
- Steuern der Geschwindigkeit des Weiterförderns der einzelnen Produkte (P) auf den im wesentlichen parallel zueinander angeordneten Bahnen (SM1, SM2, SM3) derart, dass die Produkte (P) auf allen Bahnen (SM1, SM2, SM3) am Ende der Bahnen Positionen derart haben, dass jedes Produkt (P) von jeder Bahn im wesentlichen gleichzeitig mit den Produkten (P) von den anderen Bahnen an die Verpackungsschale (T) übergeben wird.

4. Verfahren nach den Ansprüchen 1 oder 2 und 3, **dadurch gekennzeichnet, dass** vor dem Synchronisieren (200) der Produktströme auf den im wesentlichen parallel zueinander angeordneten Bahnen (SM1, SM2, SM3) auf jeder Bahn ein lückenloser Produktstrom aus den einzelnen Produktgruppen (PG) gebildet wird.

5. Verfahren nach einem der vorhergehenden Ansprüche, **dadurch gekennzeichnet, dass** die Verpackungsschale (T) um eine Position derart weiterbewegt wird, dass eine nächste Gruppe der einzelnen Produkte (P) von den im wesentlichen parallel zueinander angeordneten Bahnen (SM1, SM2, SM3) in die Reihen der Verpackungsschale (T) übergeben werden kann, nachdem eine vorhergehende Gruppe der einzelnen Produkte (P) in die Reihen der Verpackungsschale (T) übergeben wurde.

6. Verfahren nach Anspruch 5, **dadurch gekennzeichnet, dass** eine vollständig befüllte Verpackungsschale (T) und eine nachfolgende leere, als nächstes zu befüllende Verpackungsschale (T) derart angeordnet sind und um eine Position derart weiterbewegt werden, dass eine nächste Gruppe der einzelnen Produkte (P) von den im wesentlichen parallel zueinander angeordneten Bahnen (SM1, SM2, SM3) in die Reihen der leeren Verpackungsschale (T) übergeben werden kann, nachdem eine vorhergehende Gruppe der einzelnen Produkte (P) in die Reihen der vorhergehenden Verpackungsschale (T) übergeben wurde, ohne dass der Produktstrom unterbrochen wird.

7. Verfahren nach einem der vorhergehenden Ansprüche, **dadurch gekennzeichnet, dass** der einreihige Produktstrom (S1) vor dem Aufteilen auf die mehreren im wesentlichen parallel zueinander angeordneten Bahnen (SM1, SM2, SM3) aus zugeführten stückigen Produkten (P) gebildet wird.

8. Verfahren nach Anspruch 7, **dadurch gekennzeichnet, dass** die stückigen Produkte (P) nach ihrer Herstellung (10) auf mehreren, im wesentlichen parallel zueinander angeordneten Bahnen (SN) zugeführt werden.

9. Vorrichtung zum Befüllen einer mehrreihigen Verpackungsschale (T) mit stückigen Produkten (P), mit folgenden Merkmalen:
- Vorrichtungen (100) zum Aufteilen eines einreihigen Stroms (S1) stückiger Produkte (P) auf mehrere im wesentlichen parallel zueinander angeordnete Bahnen (SM; SM1, SM2, SM3) zum Weiterfördern der Produkte (P);
- Vorrichtungen (200) zum Synchronisieren der einzelnen Ströme der Produkte (P) auf den mehreren Bahnen (SM; SM1, SM2, SM3) miteinander so, dass jeweils ein Produkt (P) von einer Bahn (SM1, SM2, SM3) im wesentlichen gleichzeitig mit jeweils einem Produkt (P) von den anderen Bahnen (SM1, SM2, SM3) an die Verpackungsschale (T) übergeben werden kann; und
- Vorrichtungen (300) zum Übergeben der Produkte (P) an die Verpackungsschale (T), wobei jeweils ein Produkt (P) von einer Bahn (SM1, SM2, SM3) an eine Reihe der Verpackungsschale (T) übergeben wird;
**dadurch gekennzeichnet, dass** die Vorrichtungen (100) zum Aufteilen des Produktstroms (S1) folgende Merkmale umfassen:
- Fördereinrichtungen (110) zum Aufteilen des Produktstroms (S1) in aufeinander folgende Gruppen (PG) der stückigen Produkte (P) und zum Weiterfördern der Produktgruppen (PG);
- Verteileinrichtungen (130) zum Zuführen jeweils einer Produktgruppe (PG) zu jeweils einer der im wesentlichen parallel zueinander angeordneten Bahnen (SM1, SM2, SM3).

10. Vorrichtung nach Anspruch 9, **dadurch gekennzeichnet, dass** die Fördereinrichtungen (110) zum Aufteilen und Weiterfördern des Produktstroms (S1) eine in Förderrichtung des Produktstroms hin und her bewegliche Fördereinrichtung (110) sowie eine Einrichtung (120) zum Zählen der stückigen Produkte (P) aufweisen, um Produktgruppen (PG) mit einer vorgegebenen Anzahl der stückigen Produkte (P) und einem vorgegebenen Abstand voneinander zu bilden.

11. Vorrichtung nach Anspruch 9 oder 10, **dadurch gekennzeichnet, dass** die Verteileinrichtungen (130) zum Zuführen der Produktgruppen (PG) zu den im wesentlichen parallel zueinander angeordneten Bahnen (SM1, SM2, SM3) ein im wesentlichen quer zu der Förderrichtung des Produktstroms verschiebbares Ablenkband (140) aufweisen, das die aufeinander folgenden Produktgruppen (PG) zyklisch derart den Bahnen (SM1, SM2, SM3) zuführt, dass nebeneinander angeordneten Bahnen aufeinander folgend jeweils eine Produktgruppe (PG) zugeführt wird.

12. Vorrichtung nach einem der Ansprüche 9 bis 11, **dadurch gekennzeichnet, dass** die Vorrichtungen (200) zum Synchronisieren der Produktströme auf den im wesentlichen parallel zueinander angeordneten Bahnen (SM1, SM2, SM3) folgende Merkmale umfassen:
- Fördereinrichtungen (230, 250) zum Vereinzeln des Produktstroms auf jeder Bahn (SM1, SM2, SM3) derart, dass jeweils aufeinander folgende einzelne Produkte (P) aus dem Produktstrom mit einem Abstand zueinander weitergefördert werden;
- Einrichtungen zum Steuern der Geschwindigkeit des Weiterförderns der einzelnen Produkte (P) auf den im wesentlichen parallel zueinander angeordneten Bahnen (SM1, SM2, SM3) derart, dass die Produkte (P) auf allen Bahnen (SM1, SM2, SM3) am Ende der Bahnen Positionen derart haben, dass jedes Produkt (P) von jeder Bahn im wesentlichen gleichzeitig mit den Produkten (P) von den anderen Bahnen an die Verpackungsschale (T) übergeben wird.

13. Vorrichtung nach Anspruch 12, **dadurch gekennzeichnet, dass** mehrere Einzelfördereinrichtungen (250) in Förderrichtung des Produktstroms hintereinander angeordnet und derart ausgebildet sind, dass sie jeweils nur ein einzelnes Produkt (P) fördern, wobei zwischen den Einzelfördereinrichtungen (250) in Förderrichtung des Produktstroms Sensoreinrichtungen (255) angeordnet sind, die jeweils die Position des Produkts (P) auf jeder Einzelfördereinrichtung (250) in Förderrichtung des Produktstroms ermitteln, und wobei die Sensoreinrichtungen (255) mit Steuereinrichtungen zusammenarbeiten, die die Geschwindigkeit der Einzelfördereinrichtungen (250) in Abhängigkeit von der jeweils ermittelten Position des Produkts (P) auf jeder Einzelfördereinrichtung (250) steuern.

14. Vorrichtung nach Anspruch 12 oder 13, **dadurch gekennzeichnet, dass** in Förderrichtung des Produktstroms vor den oder am Eingang der Synchronisiervorrichtungen (200) Fördereinrichtungen (210) angeordnet sind, die auf jeder Bahn (SM1, SM2, SM3) einen lückenlosen Produktstrom aus den einzelnen Produktgruppen (PG) bilden.

15. Vorrichtung nach einem der Ansprüche 9 bis 14, **gekennzeichnet durch** Fördereinrichtungen, die die Verpackungsschale (T) um eine Position derart weiterbewegen, dass eine nächste Gruppe der einzelnen Produkte (P) von den im wesentlichen parallel zueinander angeordneten Bahnen (SM1, SM2, SM3) in die Reihen der Verpackungsschale (T) übergeben werden kann, nachdem eine vorhergehende Gruppe der einzelnen Produkte (P) in die Reihen der Verpackungsschale (T) übergeben wurde.

16. Vorrichtung nach Anspruch 15, **gekennzeichnet durch** Fördereinrichtungen, die eine vollständig befüllte Verpackungsschale (T) und eine nachfolgende leere, als nächstes zu befüllende Verpackungsschale (T) derart anordnen und um eine Position derart weiterbewegen, dass eine nächste Gruppe der einzelnen Produkte (P) von den im wesentlichen parallel zueinander angeordneten Bahnen (SM1, SM2, SM3) in die Reihen der leeren Verpackungsschale (T) übergeben werden kann, nachdem eine vorhergehende Gruppe der einzelnen Produkte (P) in die Reihen der vorhergehenden Verpackungsschale (T) übergeben wurde, ohne dass der Produktstrom unterbrochen wird.

17. Vorrichtung nach einem der Ansprüche 9 bis 16, **dadurch gekennzeichnet, dass** in Förderichtung des Produktstroms vor den Vorrichtungen (100) zum Aufteilen des einreihigen Produktstroms (S1) auf die mehreren im wesentlichen parallel zueinander angeordneten Bahnen (SM1, SM2, SM3) Vorrichtungen (50) zum Bilden des einreihigen Produktstroms (S1) aus zugeführten stückigen Produkten (P) angeordnet sind.

18. Vorrichtung nach Anspruch 17, **gekennzeichnet durch** mehrere, im wesentlichen parallel zueinander angeordnete Bahnen (SN) für eine Zufuhr der stückigen Produkte (P) nach ihrer Herstellung (10), und **durch** eine Fördereinrichtung (50) zum Zusammenführen der Produkte (P) aus den Zufuhrbahnen (SN) in eine einzige Förderbahn zum Bilden des einreihigen Produktstroms (S1).

## Claims

1. A method for filling a multi-row packaging tray (T) with piece-form products (P), comprising the following steps of:
- dividing up (100) a single-row stream (S1) of piece-form products (P) onto a plurality of lanes (SM; SM1, SM2, SM3) arranged substantially parallel to one another in order to convey the products (P) further;
- synchronizing (200) the individual streams of products (P) on the plurality of lanes (SM; SM1, SM2, SM3) with one another such that in each case one product (P) from one lane (SM1, SM2, SM3) can be transferred to the packaging tray (T) substantially at the same time as in each case one product (P) from the other lanes (SM1, SM2, SM3); and
- transferring (300) the products (P) to the packaging tray (T), wherein in each case one product (P) from one lane (SM1, SM2, SM3) is transferred to one row of the packaging tray (T) ;
**characterized in that** the step of dividing up the product stream (S1) comprises the following steps of:
- dividing up (110) the single-row product stream (S1) into successive groups (PG) of piece-form products (P) and conveying the product groups (PG) further;
- distributing the formed successive product groups (PG) by feeding (130) in each case one product group (PG) to in each case one of the lanes (SM1, SM2, SM3) arranged substantially parallel to one another.

2. The method as claimed in claim 1, **characterized in that** the successive product groups (PG) are fed cyclically to the lanes (SM1, SM2, SM3) such that lanes arranged alongside one another are fed in succession with in each case one product group (PG).

3. The method as claimed in one of claims 1 or 2, **characterized in that** the step of synchronizing the product streams on the lanes (SM1, SM2, SM3) arranged substantially parallel to one another comprises the following steps of:
- separating out (230, 250) the product stream on each lane (SM1, SM2, SM3) such that respectively successive individual products (P) from the product stream are conveyed further at a spacing from one another;
- controlling the speed of further conveying of the individual products (P) on the lanes (SM1, SM2, SM3) arranged substantially parallel to one another, such that the products (P) on all the lanes (SM1, SM2, SM3) are in positions at the end of the lanes such that each product (P) from each lane is transferred to the packaging tray (T) at substantially the same time as the products (P) from the other lanes.

4. The method as claimed in claims 1 or 2 and 3, **characterized in that**, prior to the synchronization (200) of the product streams on the lanes (SM1, SM2, SM3) arranged substantially parallel to one another, a gapless product stream composed of the individual product groups (PG) is formed on each lane.

5. The method as claimed in one of the preceding claims, **characterized in that** the packaging tray (T) is moved on by one position such that a next group of the individual products (P) can be transferred from the lanes (SM1, SM2, SM3) arranged substantially parallel to one another into the rows of the packaging tray (T) once a preceding group of the individual products (P) has been transferred into the rows of the packaging tray (T).

6. The method as claimed in claim 5, **characterized in that** a completely filled packaging tray (T) and a subsequent empty packaging tray (T) to be filled next are arranged in such a way and are moved on by one position such that a next group of the individual products (P) can be transferred from the lanes (SM1, SM2, SM3) arranged substantially parallel to one another into the rows of the empty packaging tray (T) once a preceding group of the individual products (P) has been transferred into the rows of the preceding packaging tray (T), without the product stream being interrupted.

7. The method as claimed in one of the preceding claims, **characterized in that** the single-row product stream (S1) is formed from fed piece-form products (P) before being divided up onto the plurality of lanes (SM1, SM2, SM3) arranged substantially parallel to one another.

8. The method as claimed in claim 7, **characterized in that**, after their production (10), the piece-form products (P) are fed on a plurality of lanes (SN) arranged substantially parallel to one another.

9. An apparatus for filling a multi-row packaging tray (T) with piece-form products (P), having the following features:
- apparatuses (100) for dividing up a single-row stream (S1) of piece-form products (P) onto a plurality of lanes (SM; SM1, SM2, SM3) arranged substantially parallel to one another for conveying the products (P) further;
- apparatuses (200) for synchronizing the individual streams of products (P) with one another on the plurality of lanes (SM; SM1, SM2, SM3) such that in each case one product (P) from one lane (SM1, SM2, SM3) can be transferred to the packaging tray (T) substantially at the same time as in each case one product (P) from the other lanes (SM1, SM2, SM3); and
- apparatuses (300) for transferring the products (P) to the packaging tray (T), wherein in each case one product (P) from one lane (SM1, SM2, SM3) is transferred to one row of the packaging tray (T);
**characterized in that** the apparatuses (100) for dividing up the product stream (S1) comprise the following features:
- conveying devices (110) for dividing up the product stream (S1) into successive groups (PG) of the piece-form products (P) and for conveying the product groups (PG) further;
- distribution devices (130) for feeding in each case one product group (PG) to in each case one of the lanes (SM1, SM2, SM3) arranged substantially parallel to one another.

10. The apparatus as claimed in claim 9, **characterized in that** the conveying devices (110) for dividing up and conveying the product stream (S1) further have a conveying device (110) which is movable to and fro in the conveying direction of the product stream, and also a device (120) for counting the piece-form products (P), in order to form product groups (PG) with a predetermined number of piece-form products (P) at a predetermined spacing from one another.

11. The apparatus as claimed in claim 9 or 10, **characterized in that** the distribution devices (130) for feeding the product groups (PG) to the lanes (SM1, SM2, SM3) arranged substantially parallel to one another have a deflecting belt (140) that is displaceable substantially transversely to the conveying direction of the product stream and supplies the successive product groups (PG) cyclically to the lanes (SM1, SM2, SM3) such that lanes arranged alongside one another are fed in succession with in each case one product group (PG).

12. The apparatus as claimed in one of claims 9 to 11, **characterized in that** the apparatuses (200) for synchronizing the product streams on the lanes (SM1, SM2, SM3) arranged substantially parallel to one another comprise the following features:
- conveying devices (230, 250) for separating out the product stream on each lane (SM1, SM2, SM3) such that respectively successive individual products (P) from the product stream are conveyed further at a spacing from one another;
- devices for controlling the speed of further conveying of the individual products (P) on the lanes (SM1, SM2, SM3) arranged substantially parallel to one another, such that the products (P) on all the lanes (SM1, SM2, SM3) are in positions at the end of the lanes such that each product (P) from each lane is transferred to the packaging tray (T) at substantially the same time as the products (P) from the other lanes.

13. The apparatus as claimed in claim 12, **characterized in that** a plurality of individual conveying devices (250) are arranged in succession in the conveying direction of the product stream and are formed such that they convey in each case only one individual product (P), wherein sensor devices (255) are arranged between the individual conveying devices (250) in the conveying direction of the product stream, said sensor devices (255) detecting in each case the position of the product (P) on each individual conveying device (250) in the conveying direction of the product stream, and wherein the sensor devices (255) interact with control devices which control the speed of the individual conveying devices (250) depending on the respectively detected position of the product (P) on each individual conveying device (250).

14. The apparatus as claimed in claim 12 or 13, **characterized in that** conveying devices (210) are arranged upstream, in the conveying direction of the product stream, of the synchronizing apparatuses (200) or at the inlet thereto, said conveying devices (210) forming a gapless product stream composed of the individual product groups (PG) on each lane (SM1, SM2, SM3).

15. The apparatus as claimed in one of claims 9 to 14, **characterized by** conveying devices which move the packaging tray (T) on by one position such that a next group of the individual products (P) can be transferred from the lanes (SM1, SM2, SM3) arranged substantially parallel to one another into the rows of the packaging tray (T) once a preceding group of the individual products (P) has been transferred into the rows of the packaging tray (T).

16. The apparatus as claimed in claim 15, **characterized by** conveying devices which arrange a completely filled packaging tray (T) and a subsequent empty packaging tray (T) to be filled next in such a way and move them on by one position such that a next group of the individual products (P) can be transferred from the lanes (SM1, SM2, SM3) arranged substantially parallel to one another into the rows of the empty packaging tray (T) once a preceding group of the individual products (P) has been transferred into the rows of the preceding packaging tray (T), without the product stream being interrupted.

17. The apparatus as claimed in one of claims 9 to 16, **characterized in that** apparatuses (50) for forming the single-row product stream (S1) from fed piece-form products (P) are arranged upstream, in the conveying direction of the product stream, of the devices (100) for dividing up the single-row product stream (S1) onto the plurality of lanes (SM1, SM2, SM3) arranged substantially parallel to one another.

18. The apparatus as claimed in claim 17, **characterized by** a plurality of lanes (SN) arranged substantially parallel to one another for feeding the piece-form products (P) after their production (10), and by a conveying device (50) for combining the products (P) from the feeding lanes (SN) into a single conveying lane in order to form the single-row product stream (S1).

## Revendications

1. Procédé permettant de remplir une barquette de conditionnement (T) à plusieurs rangées avec des produits (P) individuels, comportant les étapes suivantes :
- division (100) d'un flux (S1) sur une seule rangée de produits individuels (P) en plusieurs voies (SM ; SM1, SM2, SM3), disposées sensiblement parallèlement entre elles pour le transport des produits (P) ;
- synchronisation (200) des différents flux de produits (P) entre eux sur la pluralité de voies (SM ; SM1, SM2, SM3), de telle sorte que respectivement un produit (P) d'une voie (SM1, SM2, SM3) peut être transféré dans la barquette de conditionnement (T) sensiblement en même temps que respectivement un produit (P) des autres voies (SM1, SM2, SM3) ; et
- transfert (300) des produits (P) dans la barquette de conditionnement (T), respectivement un produit (P) d'une voie (SM1, SM2, SM3) étant transféré dans une rangée de la barquette de conditionnement (T) ;
**caractérisé en ce que** l'étape de division du flux de produits (S1) comporte les étapes suivantes :
- division (110) du flux de produits (S1) sur une seule rangée en groupes (PG) consécutifs de produits (P) individuels et transport des groupes de produits (PG) ;
- distribution des groupes de produits (PG) consécutifs formés, par l'acheminement (130) de respectivement un groupe de produits (PG) vers respectivement l'une des voies (SM1, SM2, SM3) sensiblement parallèles entre elles.

2. Procédé selon la revendication 1, **caractérisé en ce que** les groupes de produits (PG) consécutifs sont acheminés cycliquement vers les voies (SM1, SM2, SM3), de telle sorte que respectivement un groupe de produits (PG) est acheminé successivement vers des voies disposées côte à côte.

3. Procédé selon la revendication 1 ou 2, **caractérisé en ce que** l'étape de synchronisation des flux de produits sur les voies (SM1, SM2, SM3) disposées sensiblement parallèlement entre elles comporte les étapes suivantes :
- séparation (230, 250) des flux de produits sur chaque voie (SM1, SM2, SM3) de telle sorte que respectivement des produits (P) individuels consécutifs sont transportés hors du flux de produits avec une distance entre eux ;
- commande de la vitesse de transport des produits (P) individuels sur les voies (SM1, SM2, SM3) sensiblement parallèles entre elles, de telle sorte que les produits (P) sur toutes les voies (SM1, SM2, SM3) sont, à la fin des voies, dans des positions telles que chaque produit (P) de chaque voie est transféré dans la barquette de conditionnement (T) sensiblement en même temps que les produits (P) des autres voies.

4. Procédé selon les revendications 1 ou 2 et 3, **caractérisé en ce que**, avant la synchronisation (200) des flux de produits sur les voies (SM1, SM2, SM3) sensiblement parallèles entre elles, il est formé sur chaque voie un flux de produits continu, constitué par les groupes de produits (PG) individuels.

5. Procédé selon l'une quelconque des revendications précédentes, **caractérisé en ce que** la barquette de conditionnement (T) est déplacée sur une position, de telle sorte qu'un groupe consécutif de produits (P) individuels peut être transféré à partir des voies (SM1, SM2, SM3) sensiblement parallèles entre elles dans les rangées de la barquette de conditionnement (T), après qu'un groupe précédent de produits (P) individuels a été transféré dans les rangées de la barquette de conditionnement (T).

6. Procédé selon la revendication 5, **caractérisé en ce qu'**une barquette de conditionnement (T) complètement remplie et une barquette de conditionnement (T) vide consécutive, à savoir la prochaine à remplir, sont disposées et sont déplacées sur une position de telle sorte qu'un groupe consécutif de produits (P) individuels peut être transféré à partir des voies (SM1, SM2, SM3) sensiblement parallèles entre elles vers les rangées de la barquette de conditionnement (T) vide, après qu'un groupe précédent de produits (P) individuels a été transféré dans les rangées de la barquette de conditionnement (T) précédente sans que le flux de produits soit interrompu.

7. Procédé selon l'une quelconque des revendications précédentes, **caractérisé en ce que**, avant la division en plusieurs voies (SM1, SM2, SM3) sensiblement parallèles entre elles, le flux de produits (S1) sur une seule rangée est formé par des produits (P) individuels acheminés.

8. Procédé selon la revendication 7, **caractérisé en ce que** les produits (P) individuels après leur fabrication (10) sont acheminés sur plusieurs voies (SN) sensiblement parallèles entre elles.

9. Dispositif permettant de remplir une barquette de conditionnement (T) à plusieurs rangées avec des produits (P) individuels, comportant les caractéristiques suivantes :
- des dispositifs (100) destinés à diviser un flux (S1) sur une seule rangée de produits individuels (P) en plusieurs voies (SM ; SM1, SM2, SM3), disposées sensiblement parallèlement entre elles pour le transport des produits (P) ;
- des dispositifs (200) destinés à synchroniser entre eux les différents flux de produits (P) sur la pluralité de voies (SM ; SM1, SM2, SM3), de telle sorte que respectivement un produit (P) d'une voie (SM1, SM2, SM3) peut être transféré dans la barquette de conditionnement (T) sensiblement en même temps que respectivement un produit (P) des autres voies (SM1, SM2, SM3) ; et
- des dispositifs (300) destinés à transférer les produits (P) dans la barquette de conditionnement (T), respectivement un produit (P) d'une voie (SM1, SM2, SM3) étant transféré dans une rangée de la barquette de conditionnement (T) ;
**caractérisé en ce que** les dispositifs (100) destinés à diviser le flux de produits (S1) comportent les caractéristiques suivantes :
- des dispositifs de transport (110) destinés à diviser le flux de produits (S1) en groupes (PG) consécutifs de produits (P) individuels et à transporter les groupes de produits (PG) ;
- des dispositifs de distribution (130) destinés à acheminer respectivement un groupe de produits (PG) vers respectivement l'une des voies (SM1, SM2, SM3) sensiblement parallèles entre elles.

10. Dispositif selon la revendication 9, **caractérisé en ce que** les dispositifs de transport (110) destinés à diviser et à transporter le flux de produits (S1) comportent un dispositif de transport (110) mobile en va-et-vient dans le sens de transport du flux de produits, ainsi qu'un dispositif (120) destiné à compter les produits (P) individuels, afin de former des groupes de produits (PG) avec un nombre prédéfini de produits (P) individuels et à une distance prédéfinie les uns des autres.

11. Dispositif selon la revendication 9 ou 10, **caractérisé en ce que** les dispositifs de distribution (130) destinés à acheminer les groupes de produits (PG) vers les voies (SM1, SM2, SM3) sensiblement parallèles entre elles comportent une bande de déviation (140), qui peut être déplacée sensiblement transversalement au sens de transport du flux de produits et qui achemine cycliquement les groupes de produits (PG) consécutifs vers les voies (SM1, SM2, SM3), de telle sorte que respectivement un groupe de produits (PG) est acheminé successivement vers des voies disposées côte à côte.

12. Dispositif selon l'une quelconque des revendications 9 à 11, **caractérisé en ce que** les dispositifs (200) destinés à synchroniser les flux de produits sur les voies (SM1, SM2, SM3) sensiblement parallèles entre elles comportent les caractéristiques suivantes :
- des dispositifs de transport (230, 250) destinés à séparer les flux de produits sur chaque voie (SM1, SM2, SM3) de telle sorte que respectivement des produits (P) individuels consécutifs sont transportés hors du flux de produits avec une distance entre eux ;
- des dispositifs destinés à commander la vitesse de transport des produits (P) individuels sur les voies (SM1, SM2, SM3) sensiblement parallèles entre elles, de telle sorte que les produits (P) sur toutes les voies (SM1, SM2, SM3) sont, à la fin des voies, dans des positions telles que chaque produit (P) de chaque voie est transféré dans la barquette de conditionnement (T) sensiblement en même temps que les produits (P) des autres voies.

13. Dispositif selon la revendication 12, **caractérisé en ce que** plusieurs dispositifs de transport individuel (250) sont disposés les uns derrière les autres dans le sens de transport du flux de produits et sont configurés de telle sorte qu'ils transportent chacun seulement un seul produit (P), des dispositifs de détection (255) étant disposés entre les dispositifs de transport individuel (250) dans le sens de transport du flux de produits et déterminant dans chaque cas la position du produit (P) sur chaque dispositif de transport individuel (250) dans le sens de transport du flux de produits, et lesdits dispositifs de détection (255) coopérant avec des dispositifs de commande qui commandent la vitesse des dispositifs de transport individuel (250) en fonction de la position du produit (P) déterminée dans chaque cas sur chaque dispositif de transport individuel (250).

14. Dispositif selon la revendication 12 ou 13, **caractérisé en ce que**, par référence au sens de transport du flux de produits, en amont des dispositifs de synchronisation (200) ou à l'entrée de ceux-ci sont disposés des dispositifs de transport (210) qui forment sur chaque voie (SM1, SM2, SM3) un flux de produits continu, constitué par les groupes de produits (PG) individuels.

15. Dispositif selon l'une quelconque des revendications 9 à 14, **caractérisé par** des dispositifs de transport qui déplacent la barquette de conditionnement (T) sur une position, de telle sorte qu'un groupe consécutif de produits (P) individuels peut être transféré à partir des voies (SM1, SM2, SM3) sensiblement parallèles entre elles dans les rangées de la barquette de conditionnement (T), après qu'un groupe précédent de produits (P) individuels a été transféré dans les rangées de la barquette de conditionnement (T).

16. Dispositif selon la revendication 15, **caractérisé par** des dispositifs de transport qui disposent une barquette de conditionnement (T) complètement remplie et une barquette de conditionnement (T) vide consécutive, à savoir la prochaine à remplir, et les transportent sur une position de telle sorte qu'un groupe consécutif de produits (P) individuels peut être transféré à partir des voies (SM1, SM2, SM3) sensiblement parallèles entre elles vers les rangées de la barquette de conditionnement (T) vide, après qu'un groupe précédent de produits (P) individuels a été transféré dans les rangées de la barquette de conditionnement (T) précédente sans que le flux de produits soit interrompu.

17. Dispositif selon l'une quelconque des revendications 9 à 16, **caractérisé en ce que**, par référence au sens de transport du flux de produits, en amont des dispositifs (100) destinés à diviser le flux de produits, acheminé sur une rangée, en plusieurs voies (SM1, SM2, SM3) sensiblement parallèles entre elles, sont disposés des dispositifs (50) destinés à former le flux de produits (S1) sur une seule rangée à partir des produits (P) individuels acheminés.

18. Dispositif selon la revendication 17, **caractérisé par** plusieurs voies (SN) sensiblement parallèles entre elles pour un acheminement des produits (P) individuels après leur fabrication (10), et par un dispositif de transport (50) destiné à regrouper les produits (P) à partir des voies d'acheminement (SN) en une seule voie de transport pour former le flux de produits (S1) sur une seule rangée.
